Europäisches Patentamt

European Patent Office

Office européen des brevets

(11) Veröffentlichungsnummer: **0 501 027 A1**

# EUROPÄISCHE PATENTANMELDUNG

(21) Anmeldenummer: **91121210.8**

(22) Anmeldetag: **11.12.91**

(51) Int. Cl.5: **B29C 67/18**, B60J 10/12

(30) Priorität: **28.02.91 DE 4106252**

(43) Veröffentlichungstag der Anmeldung:
**02.09.92 Patentblatt 92/36**

(84) Benannte Vertragsstaaten:
**FR GB IT NL**

(71) Anmelder: **WEBASTO-SCHADE GmbH**
**Argelsrieder Feld 10**
**W-8031 Oberpfaffenhofen(DE)**

(72) Erfinder: **Jardin, Hans**
**Moosstrasse 25 a**
**W-8084 Inning(DE)**
Erfinder: **Strunk, Harald**
**Schlehenweg 8**
**W-5970 Plettenberg(DE)**

(54) **Verfahren zum Herstellen einer Deckeleinheit mit Dichtung für Fahrzeugdächer und Deckeleinheit für Fahrzeugdächer.**

(57) Es wird ein Verfahren zum Herstellen einer Deckeleinheit mit Dichtung für Fahrzeugdächer angegeben, bei dem in ein Formwerkzeug mit einem Oberteil und einem Unterteil ein Deckelteil, wie ein Glasdeckelteil, ein Deckelträger und ein Profilteil eingelegt werden, zwischen denen Randspalte vorhanden sind, die durch Einbringen einer Elastomermasse ausgefüllt werden und diese Baugruppe zu einer Deckeleinheit verbinden. Das Profilteil wird hierbei mittels Fixiervorsprüngen am Oberteil und/oder Unterteil des Formwerkzeugs hinsichtlich seiner Lage bei der Herstellung der Deckeleinheit fixiert und ausgerichtet. An dem Profilteil kann eine Umfangsdichtung angeformt werden, welche mit ein und demselben Formwerkzeug hergestellt werden kann. Diese Umfangsdichtung ist zweckmäßigerweise vom Profilteil lösbar, so daß die Dichtungsaufnahme des Profilteils zum Einsetzen einer Ersatzdichtung genutzt werden kann. Auch wird eine Deckeleinheit für Fahrzeugdächer angegeben, die ein Deckelteil, einen Deckelträger und ein Profilteil mit einer gegebenenfalls angeformten Umfangsdichtung umfaßt, welche mit Hilfe einer Elastomermasse zu einer Einheit verbunden sind.

FIG. 2

Die Erfindung bezieht sich auf ein Verfahren zum Herstellen einer Deckeleinheit mit Dichtung für Fahrzeugdächer, bei dem in ein ein Oberteil und ein Unterteil umfassendes Formwerkzeug wenigstens ein Deckelteil und ein Deckelträger unter Freilassung von Randspalte angeordnet werden, und bei geschlossenem Formwerkzeug eine Elastomermasse eingebracht wird, welche die Randspalte ausfüllt und das Deckelteil mit dem Deckelträger zu der Deckeleinheit verbindet, an der eine Umfangsdichtung vorgesehen werden kann. Ferner befaßt sich die Erfindung mit einer Deckeleinheit für Fahrzeugdächer.

Aus DE 37 42 719 A1 ist ein Verfahren zum Herstellen einer Deckel und Dichtung umfassenden Baugruppe für Fahrzeugdächer der eingangs genannten Art bekannt. Bei diesem Verfahren werden in ein ein Oberteil und ein Unterteil umfassendes Formwerkzeug ein Deckelteil, wie ein Glasdeckel und ein Deckelträger zusammen mit einer Dichtung mit einem Dichtungskörper und einem nach innen gerichteten Satz derart eingelegt, daß sich die Dichtung mit ihrem Außenrand gegen den Innenrand des Formwerkzeugs anlegt, der Ansatz zwischen den Deckelträger und den Deckelteil ragt und zwischen den Außenrändern von Deckelteil und Deckelträger sowie Innenwandteilen des Dichtungskörpers Randspalte freibleiben, die über Durchbrechungen des Ansatzes der Dichtung miteinander in Verbindung stehen. Dann wird das Werkzeug geschlossen, und in das geschlossene Werkzeug wird eine die Randspalte ausfüllende sowie Deckelteil, Deckelträger und Dichtung untereinander verbindende Elastomermasse eindosiert. Bei diesem Herstellungsverfahren wird somit durch die als Verbindung dienende Elastomermasse eine Einheit aus Deckelteil, Deckelträger und einer in das Formwerkzeug eingelegten Dichtung gebildet. Bei einer derart hergestellten Baugruppe bereitet die Einhaltung von engen Toleranzen bei den Außenabmessungen der hergestellten Baugruppe Schwierigkeiten, da der Dichtungskörper der eingelegten Dichtung gegen eine Wandung des Formwerkzeugs anliegt und daher beim Einbringen der Elastomermasse verformt werden kann, so daß sich große Toleranzschwankungen bei den Außenabmessungen kaum vermeiden lassen. Außerdem umfaßt das Formwerkzeug zur Herstellung der Baugruppe mehrere Hinterschneidungen, wodurch die Herstellung des Formwerkzeugs sich verteuert. Insbesondere wenn die Dichtung beim Einsatz der Baugruppe als Deckel für ein Fahrzeugdach beschädigt wird oder mit der Zeit verschleißt, muß die gesamte Baugruppe ausgewechselt werden, obgleich an sich nur die Umfangsdichtung oder Randspaltabdichtung erneuerungsbedürftig wäre. Die Baugruppe ist daher wenig wartungsfreundlich.

Aus DE 35 06 009 C2 ist ein starrer Deckel für ein Fahrzeugdach bekannt, bei dem zum Kleinhalten der Fertigungstoleranzen der Außenmasse eines Deckels für Fahrzeugdächer eine Deckelplatte und einen unterlegten Verstärkungsrahmen mit einem einteilig umlaufenden Kunststoffrahmen umspritzt wird, der zugleich einen oberen Einfaßrahmen bildet und angeformte Befestigungselemente für eine Dichtung bzw. ein Dichtungselement hat. Die dort beschriebene Vorgehensweise ist relativ umständlich, weil nach dem Umspritzen des Deckelteils die Dichtung in die von dem Kunststoffrahmen als Befestigungselemente gebildete Nut eingebracht werden muß. Ferner steht der Kunststoffrahmen über die Deckelplatte nach oben vor, was aus ästhetischen Gründen sowie im Hinblick auf Windgeräusche und Schmutzansammlungen nachteilig ist. Abgesehen hiervon hat auch das dort benötigte Werkzeug mehrere Hinterschneidungen, die zu einer Verteuerung bei der Herstellung des Werkzeugs beitragen.Ferner lassen sich auch hierbei relativ große Toleranzschwankungen bei den Außenabmessungen eines solchen starren Deckels kaum vermeiden, da sich zumindestens die Toleranzen des Dichtungsaufnahmebereichs und die Toleranzen der Dichtung selbst addieren.

Die Erfindung zielt daher darauf ab, unter Überwindung der zuvor geschilderten Schwierigkeiten ein Verfahren zum Herstellen einer Deckeleinheit mit Dichtung für Fahrzeugdächer und eine Deckeleinheit für Fahrzeugdächer bereitzustellen, bei denen auf herstellungstechnisch und kostengünstige Weise sich enge Toleranzbereiche im Hinblick auf die Außenabmessungen der Deckeleinheit mit Dichtung einhalten lassen und im Bedarfsfall die Dichtung schnell und einfach ausgewechselt werden kann.

Nach der Erfindung zeichnet sich einerseits hierzu ein Verfahren zum Herstellen einer Deckeleinheit mit Dichtung für Fahrzeugdächer, bei dem in ein ein Oberteil und ein Unterteil umfassendes Formwerkzeug wenigstens ein Deckelteil und ein Deckelträger unter Freilassung von Randspalte angeordnet werden, und bei geschlossenem Formwerkzeug eine Elastomermasse eingebracht wird, welche die Randspalte ausfüllt und das Deckelteil mit dem Deckelträger zu einer Deckeleinheit verbindet, an der eine Umfangsdichtung vorgesehen werden kann, dadurch aus, daß in einem Abstand zu der Anordnung aus Deckelteil und Deckelträger in das Formwerkzeug ein eine Dichtungsaufnahme bildendes Profilteil aus einem härteren Werkzeug als die Elastomermasse eingelegt wird, und daß das Profilteil bei geschlossenem Formwerkzeug lagefixiert wird.

Beim erfindungsgemäßen Verfahren wird somit eine Deckeleinheit bereitgestellt, die wenigstens eine Dichtungsaufnahme hat, die von dem Profilteil gebildet wird, welches in das Formwerkzeug so eingelegt ist, daß es hinsichtlich seiner Lage bei geschlossenem Formwerkzeug fixiert ist. Hierdurch wird erreicht, daß bei der Herstellung der Deckeleinheit Außenabmessungen ohne eine nennenswerte Verkomplizierung des Formwerkzeugs mit sehr engen Toleranzbereichen sich einhalten lassen, wodurch sich die Herstellungsgenauigkeit wesentlich verbessern läßt. Dies ist im wesentlichen auf die Lagefixierung des Profilteils zurückzuführen, das bei dem Einfüllen der Elastomermasse beim erfindungsgemäßen Herstellungsverfahren nicht verlagert werden kann. Somit wird beim erfindungsgemäßen Herstellungsverfahren ein Verbund aus Deckelteil, Deckelträger und Profilteil mit genau bestimmbaren Außenabmessungen hergestellt. Da das Profilteil eine Dichtungsaufnahme bildet, kann eine dort anzubringende Dichtung gegebenenfalls leicht und schnell ausgewechselt werden, so daß eine solche Deckeleinheit auch wartungsfreundlich ausgelegt ist.

Vorzugsweise werden nach der Erfindung am Unterteil und/oder am Oberteil des Formwerkzeugs zur Lagefixierung Fixiervorsprünge vorgesehen, welche das eingelegte Profilteil berühren. Bei einer solchen Ausgestaltung wird erreicht, daß bei dem Schließvorgang des Formwerkzeugs noch eine Relativausrichtung des Profilteils in Verbindung mit den zur Lagefixierung dienenden Vorsprüngen zwischen Unterteil und Oberteil des Formwerkzeugs erreicht wird. Da die Mittel zur Lagefixierung somit formwerkzeugsfest sind, läßt sich die Einhaltung von engen Toleranzen auch bei einer Massenfertigung gewährleisten. Vorzugsweise berühren die Fixiervorsprünge das Profilteil an der von der Anordnung aus Deckelteil und Deckelträger abgewandten Seite, so daß die zur Herstellung der Verbundeinheit eingesetzte elastomere Masse an möglichst große zu verbindende Flächen gelangen kann. Die Fixiervorsprünge halten somit das Profilteil von seiner Außenseite her gesehen.

Das Profilteil mit der Dichtungsaufnahme kann einteilig oder mehrteilig ausgelegt sein. Dies hängt im wesentlichen von der Ausgestaltungsform des Aufnahmebereichs für die Dichtung ab.

Vorzugsweise hat das Profilteil einen C-förmigen Querschnitt, dessen offene Seite nach außen weist, und das den Dichtungsaufnahmeraum begrenzt. Hierbei erhält man einen Dichtungsaufnahmeraum, der Hinterschneidungen am Profilteil hat, so daß ein zuverlässiges Festlegen der Umfangsdichtung auch bei der Verwendung einer Hohlraumdichtung möglich ist, aber zu der Ausbildung eines derartigen Dichtungsaufnahmeraums keine Hinterschneidungen am Werkzeug erforderlich sind. Gemäß einer bevorzugten Ausführungsform des erfindungsgemäßen Verfahrens wird am Formwerkzeug ein Formhohlraum für die Dichtung ausgebildet, der gegenüber der Deckeleinheit getrennt und abgedichtet ist. Dieser Formhohlraum kann dazu genutzt werden, in ein und demselben Formwerkzeug auch zugleich eine entsprechende Dichtung für die Deckeleinheit herzustellen, so daß sich zusätzlich enge Toleranzen bei einer Deckeleinheit mit angebrachter Dichtung erzielen lassen, aber die jeweiligen Verbindungen frei von einem wechselseitigen Einfluß hinsichtlich Verlagerungen und hierdurch bedingten Toleranzabweichungen und Toleranzadditionen sind. Mit diesem Formhohlraum läßt sich dann für die Dichtung ein weicherer Werkstoff einfüllen, so daß mit ein und demselben Formwerkzeug Teile aus unterschiedlichen Materialien hergestellt werden können.

Vorzugsweise bilden hierbei die Fixiervorsprünge für das Profilteil die Trennung und Abdichtung zum Formhohlraum für die Dichtung. Somit kommt diesen Fixiervorsprüngen eine Doppelfunktion zu. Da der Formhohlraum für die Dichtung gegenüber den anderen Teilen der Deckeleinheit abgedichtet ist und hiervon getrennt ist, lassen sich mit Hilfe des Formhohlraums für die Dichtung unterschiedlich auslegbare Dichtungen ausformen. Insbesondere läßt sich eine Hohlraumdichtung auf einfache Weise hierbei herstellen. Zweckmässigerweise ist die Verfahrensführung derart gewählt, daß die Dichtung an dem Profilteil angeformt wird, so daß die Deckeleinheit mit der angeformten Dichtung als Einheit nach der Herstellung aus dem Formwerkzeug entnommen werden kann. Somit kann man in einem Arbeitsgang auf einfache Weise eine vorgefertigte Deckeleinheit mit Dichtung erhalten. Wenn die Dichtung während des Gebrauchs der Deckeleinheit in einem Fahrzeugdach beschädigt wird, kann die am Profilteil angeformte Dichtung abgelöst und abgerissen werden, und in die Dichtungsaufnahme des Profilteils läßt sich dann eine Ersatzdichtung schnell und einfach einsetzen, so daß sich bei dieser Herstellungsweise auch beträchtliche Vorteile hinsichtlich des Wartungsaufwandes ergeben.

Vorzugsweise wird der Formhohlraum für die Dichtung größtenteils vom Unterteil des Formwerkzeugs begrenzt, und das Unterteil hat hierbei eine Hinterschneidung. Diese Hinterschneidung am Werkzeugunterteil wird bei an dem Profilteil angeformter Dichtung zur Halterung der Deckeleinheit mit Dichtung genutzt, wenn das Formwerkzeug zum Entnehmen der hergestellten Deckeleinheit mit Dichtung geöffnet wird.

Gemäß einem weiteren Lösungsgedanken nach der Erfindung wird auch eine Deckeleinheit für Fahrzeugdächer mit einem Deckelteil und einem Deckelträger bereitgestellt, die mittels einer Elastomermasse zu einer Einheit verbunden sind und mit einer am Außenrand vorgesehenen Dichtung versehen ist, wobei sich die Deckeleinheit dadurch auszeichnet, daß ein Profilteil aus einem härteren Werkstoff als die Elastomermasse durch die Elastomermasse mit der Deckeleinheit verbunden ist und das Profilteil eine Dichtungsaufnahme hat. Eine solche Deckeleinheit läßt sich insbesondere hinsichtlich den Außenabmessungen relativ genau fertigen und es lassen sich die durch die Elastomermasse bedingten Flächen des Deckelteils, die nach außen und/oder innen sichtbar sind, soweit wie möglich reduzieren, um ein ästhetisch ansprechendes Äußeres einer solchen Deckeleinheit für Fahrzeugdächer zu erhalten.

Vorzugsweise ist an dem Profilteil die Dichtung angeformt, die zweckmäßigerweise von einer Hohlraumdichtung gebildet wird. Zur Verringerung des Wartungsaufwands zum Auswechseln einer beschädigten Dichtung ist die angeformte Dichtung vorzugsweise vom Profilteil lösbar, so daß dann eine Ersatzdichtung in die Dichtungsaufnahme des Profilteils schnell und leicht eingesetzt werden kann.

Die Erfindung wird nachstehend anhand von bevorzugten Ausführungsformen unter Bezugnahme auf die beiliegende Zeichnung näher erläutert. Darin zeigt:

Fig. 1 eine Schnittansicht eines Formwerkzeugs für das erfindungsgemäße Herstellungsverfahren ohne eingelegte Teile,

Fig. 2 eine Schnittansicht eines Formwerkzeugs für das erfindungsgemäße Herstellungsverfahren im geschlossenen Zustand und mit eingelegten und zu einer Deckeleinheit verbundenen Teilen,

Fig. 3 eine Teilschnittansicht einer ersten Ausführungsform einer Deckeleinheit mit angeformter Umfangsdichtung,

Fig. 4 eine Schnittansicht eines Beispiels einer Ersatzdichtung, und

Fig. 5 eine Schnittansicht zur Verdeutlichung einer Ausführungsvariante einer Einheit aus Profilteil und angeformter Umfangsdichtung.

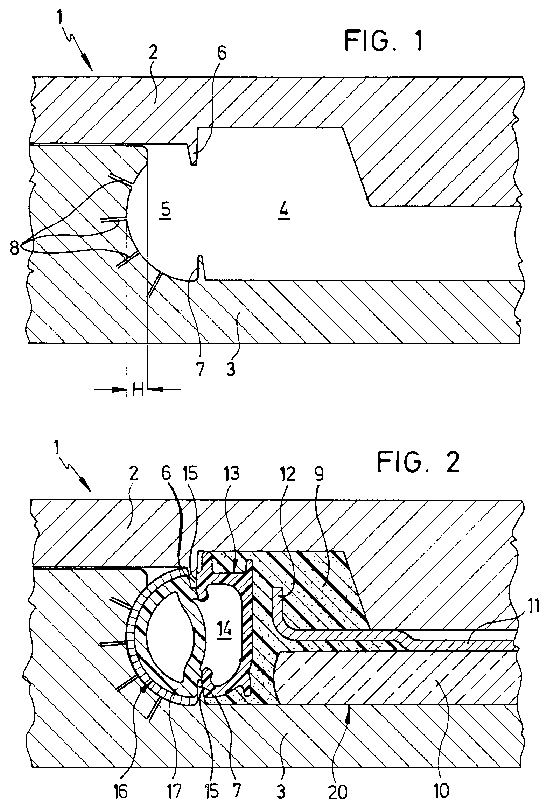

In den Figuren der Zeichnung sind gleiche oder ähnliche Teile mit denselben Bezugszeichen versehen. Anhand den Fig. 1 und 2 wird zuerst das Verfahren zum Herstellen einer Deckeleinheit mit Dichtung für Fahrzeugdächer erläutert. Eine solche Deckeleinheit ist beispielsweise für öffenbare Fahrzeugdächer beliebiger Art bestimmt, bei denen es sich beispielsweise um Hebedächer, Schiebedächer, Schiebehebedächer einschließlich Spoilerdächer o.dgl. handeln kann.

In Fig. 1 der Zeichnung ist eine bevorzugte Ausführungsform eines insgesamt mit 1 bezeichneten Formwerkzeugs ohne die Einzelteile der Deckeleinheit dargestellt. Das Formwerkzeug hat ein Oberteil 2 und ein Unterteil 3. In dem mit 4 bezeichneten Raum des Formwerkzeugs 1 werden die zu einer Einheit zu verbindenden Teile der Deckeleinheit, nämlich ein Deckelteil, ein Deckelträger und ein Profilteil angeordnet, wie dies näher aus Fig.2 zu ersehen und dort erörtert wird. Der Raum 4 wird von Fixiervorsprüngen 6 und 7 begrenzt, wobei der Fixiervorsprung 6 im Oberteil 2 und der Fixiervorsprung 7 am Unterteil 3 des Formwerkzeugs 1 ausgebildet sind. An diesen Raum 4 schließt sich unter Trennung und Abdichtung durch die Fixiervorsprünge 6 und 7 ein weiterer Raum 5 an, welcher zur Herstellung einer Umfangsdichtung genutzt werden kann. Mit 8 sind Eingußkanäle verdeutlicht, über die die Masse zur Herstellung der Umfangsdichtung in den Raum 5 eingebracht werden kann. Wie gezeigt ist bei dem Formwerkzeug 1 im wesentlichen nur eine Hinterschneidung H vorgesehen, welche im Bereich des Raumes 5 für die Ausbildung der Umfangsdichtung liegt.

Wenn das Oberteil 2 und das Unterteil 3 des Formwerkzeugs 1 in Fig. 1 voneinander abgerückt sind, d.h. das Formwerkzeug 1 geöffnet ist, werden entsprechend Fig. 2 in den Raum 4 ein Deckelteil 10, das beispielsweise aus einem durchsichtigen Material wie bei einem Glasdeckel hergestellt sein kann, ein Deckelträger 11, der beispielsweise aus einem metallischen Material hergestellt sein kann, und einen hochstehenden Flansch 12 hat, und wenigstens ein Profilteil 13 eingelegt, welches von der Anordnung aus Deckelträger 11 und Deckelteil 10 einen vorbestimmten Abstand hat. Das Profilteil 13 ist zweckmäßigerweise aus einem relativ harten Werkstoff hergestellt und hat eine solche Profilierung, daß es eine Dichtungsaufnahme 14 bildet, welche Hinterschneidungen hat. Wenn das Deckelteil 10, der Deckelträger 11 und das Profilteil 13 unter entsprechender Zuordnung vorzugsweise auf das Unterteil 3 des Formwerkzeugs 1 gelegt sind, wird das Formwerkzeug 1 geschlossen, indem das Oberteil 2 auf das beispielsweise feststehende Unterteil 3 zubewegt wird. Bei dieser Schließbewegung kommen die Fixiervorsprünge 6, 7 in Berührung mit dem Profilteil 13, so daß dieses hinsichtlich seiner Lage fixiert wird. Beim dargestellten Beispiel kommen die Fixiervorsprünge 6, 7 mit Teilen jener Seite 15 des Profilteils 13 in Berührung, welche von der Anordnung aus Deckelteil 10 und Deckelträger 11 abgewandt liegt. Wie aus Fig. 2 zu ersehen ist, wird mit Hilfe des eingelegten Profilteils 13 erreicht, daß der in Fig. 1 gezeigte Raum 4 dicht abgeschlossen ist. Zugleich wird das Profilteil 13 beim Schließen des Formwerkzeugs 1 in der durch die Fixiervorsprünge 6,7 bestimmten Anordnung ausgerichtet. Nach dem Schließen des Formwerkzeugs 1 wird dann mit Hilfe von nicht näher dargestellten Einrichtungen eine Elastomermasse eingebracht, welche die Randspalte zwischen dem Deckelteil 10, dem Deckelträger 11 und dem Profilteil 13 ausfüllt, so daß man eine Deckeleinheit aus Deckelteil 10, Deckelträger 11 und Profilteil 13 erhält, das eine Dichtungsaufnahme 14 hat. Bei dem bisher erläuterten Herstellungsverfahren handelt es sich um die Grundausbildungsform, bei der eine Deckeleinheit aus Deckelteil 10, Deckelträger 11 und Profilteil 13 hergestellt wird.

Wie ferner aus Fig. 2 zu ersehen ist, kann gemäß einer bevorzugten Ausführungsform der Herstellungsverfahrensweise mit ein und demselben Formwerkzeug 1 auch zugleich eine Umfangsdichtung 16 ausgeformt werden, die beim dargestellten Beispiel als Hohlraumdichtung 17 ausgelegt ist. Zur Herstellung der Umfangsdichtung 16 wird ein zweckmäßigerweise weicheres Material in den in Fig. 1 gezeigten Raum 5 eingebracht, wobei durch entsprechende Materialabstimmung erreicht werden kann, daß die Umfangsdichtung 16 unmittelbar am Profilteil 13 angeformt ist. Da der Raum 5 in Verbindung mit dem eingelegten Profilteil 13 und den Fixiervorsprüngen 6, 7 des Formwerkzeugs 1 gegenüber dem Raum 4 abgedichtet und getrennt ist, können so in ein und demselben Formwerkzeug 1 unterschiedliche Materialien bearbeitet und eingebracht werden.

Die Formgebung der Umfangsdichtung 16 läßt sich an die jeweils gewünschten Erfordernisse anpassen, so daß die Erfindung nicht auf die anhand den Fig. 1 und 2 erläuterten Einzelheiten beschränkt ist.

Da beim erfindungsgemäßen Verfahren eine Deckeleinheit mit Dichtung der vorstehend genannten Art mit Hilfe ein und desselben Formwerkzeugs 1 hergestellt wird, und das Profilteil 13 lagefixiert ist, lassen sich enge Toleranzen bei den Außenabmessungen einer solchen Deckeleinheit sicher einhalten. Ferner bedeckt die Elastomermasse 9 für die Herstellung der Verbindung zwischen dem Deckelteil 10, dem Deckelträger 11 und dem Profilteil 13 über den Flansch 12 des Deckelträgers 11 nur einen geringen Teil des Deckelteils am Randbereich desselben, und es ist nach einer Seite hin ein planarer Abschluß von Deckelteil und Elastomermasse 9 vorhanden, so daß eine derart hergestellte Deckeleinheit selbst mit angeformter Umfangsdichtung 16 ein ästhetisches Äußeres hat und sich flachbauend auslegen läßt.

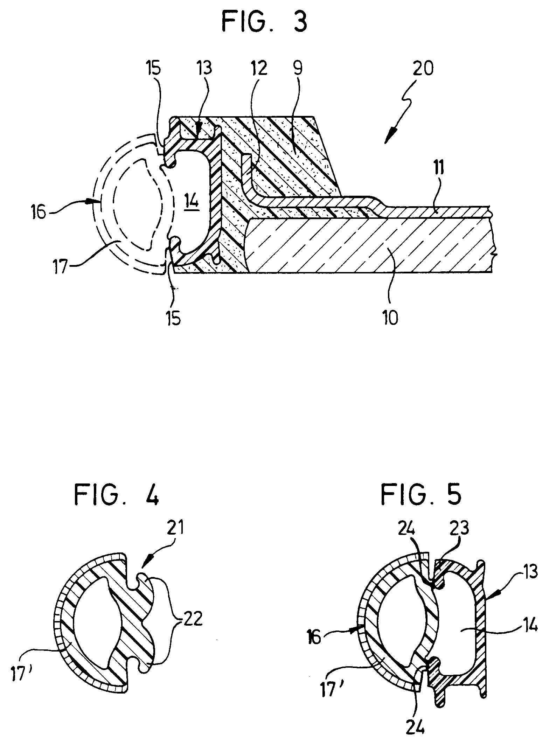

In Fig. 3 ist eine nach dem erfindungsgemäßen Verfahren hergestellte Deckeleinheit 20 als bevorzugtes Ausführungsbeispiel gesondert dargestellt. In gebrochenen Linien ist dort die unmittelbar am Profilteil 13 angeformte Umfangsdichtung 16 als Alternative verdeutlicht. Diese Deckeleinheit 20 umfaßt unter Bezugnahme auf die voranstehende Erläuterung das Deckelteil 10, den Deckelträger 11 und den Flansch 12 und wenigstens das Profilteil 13. Alternativ kann zusätzlich noch an dem Profilteil 13 die Umfangsdichtung 16 unmittelbar angeformt sein.

In Fig. 4 ist ein Beispiel einer Ersatzdichtung gezeigt, die insgesamt mit 21 bezeichnet ist. Wenn die entsprechend Fig.3 unmittelbar am Profilteil 13 angeformte Umfangsdichtung 16 beschädigt oder verschlissen ist, so kann diese an den Übergangsstellen von der Umfangsdichtung 16 zum Profilteil 13 beispielsweise durch Abreißen abgelöst werden. Es liegt dann die Dichtungsaufnahme 14, die vom Profilteil 13 gebildet und begrenzt wird, frei. In diese Dichtungsaufnahme 14 kann dann die in Fig. 4 gezeigte Ersatzdichtung 21 eingesetzt werden. Die Ersatzdichtung 21 ist im wesentlichen ähnlich wie die Umfangsdichtung 16 ausgelegt und ist ebenfalls als Hohlraumdichtung 17' ausgebildet. Ferner umfaßt die Ersatzdichtung 21 dem Profilteil 13 zugewandt liegend fingerförmige Ansätze 22, welche in die Dichtungsaufnahme 14 des Profilteils 13 (siehe Fig. 3) eingedrückt werden und dann die Hinterschneidungen der Dichtungsaufnahme 14 hintergreifen, so daß die Ersatzdichtung 21 sicher am Profilteil 13 festgelegt ist. Da es sich bei der Umfangsdichtung 16 um ein sehr verschleißanfälliges Teil handelt, das insbesondere auch allen Witterungsbedingungen ausgesetzt ist, kann somit bei der erfindungsgemäßen Auslegung der Deckeleinheit 20 erreicht werden, daß man schnell und einfach die beispielsweise angeformte Umfangsdichtung 16 durch die in Fig. 4 gezeigte Ersatzdichtung 21 auswechseln kann.

In Fig. 5 ist eine Ausführungsvariante zur Verdeutlichung einer Verbindung eines Profilteils 13' mit einer Umfangsdichtung 16 verdeutlicht. Das Profilteil 13' unterscheidet sich von dem vorangehend erläuterten Profilteil 13 im wesentlichen dadurch, daß die Teile 23 des Profilteils 13', welches als Einlegeprofilteil ausgelegt ist, härter als die übrigen Teile des Körpers des Profilteils 13' sind. An diese härteren Bereiche 23 wird die Umfangsdichtung 16 über einen dünnen Verbindungsfilm 24 angebunden. Bei dieser in Fig. 5 gezeigten Auslegung wird durch die Anbindung über den dünnen Verbindungsfilm 24 erreicht, daß sich die Umfangsdichtung 16 im Reparaturfalle leichter vom Profilteil 13' an den härteren Bereichen 23 ablösen läßt. Wenn dann eine Ersatzdichtung, beispielsweise die in Fig. 4 gezeigte Ersatzdichtung 21, in das Profilteil 13' eingesetzt wird, dienen die härteren Bereiche 23 ferner dazu, daß die Ersatzdichtung 21 fester in der Dichtungsaufnahme 14 gehalten und aufgenommen ist und gegen ein Abziehen gesichert ist. Ferner erleichtert sich aufgrund der sehr unterschiedlichen Elastizitätseigenschaften zwischen den härteren Bereichen 23 des Profilteils 13' und jenen der Ersatzdichtung 21 das Einschieben der Ersatzdichtung 21 im Bedarfsfall.

Selbstverständlich ist die Erfindung nicht auf die voranstehend beschriebenen Einzelheiten weder hinsichtlich des Herstellungsverfahrens noch der Deckeleinheit 20 beschränkt, sondern es sind zahlreiche Abänderungen und Modifikationen möglich, die der Fachmann im Bedarfsfall treffen wird, ohne den Erfindungsgedanken zu verlassen. Beispielsweise kann das Profilteil 13, 13' auch eine abweichende Ausgestaltungsform haben, sofern sichergestellt ist, daß sich dieses Profilteil 13, 13' zuverlässig in der elastomeren Masse 9 mit sicherem Halt verankern läßt und andererseits eine Dichtungsaufnahme 14 mit einer solchen Ausgestaltungsform bereitgestellt wird, die ein sicheres Festlegen einer Ersatzdichtung 21 gewährleistet. Wesentlich beim erfindungsgemäßen Verfahren ist die Tatsache, daß ein Profilteil 13, 13' als Einlegeteil für ein Formwerkzeug 1 verwendet wird, welches mehrere Funktionen in sich vereinigt. Im Hinblick auf die nach der Erfindung einzuhaltenden engen Toleranzen für die Außenabmessungen der Deckeleinheit 20 ist es ferner wesentlich, daß dieses Profilteil 13, 13' im Formwerkzeug 1 lagefixiert ist. Da über die Fixiervorsprünge 6, 7 in Verbindung mit dem Profilteil 13, 13' der im Formwerkzeug 1 zwischen dem Oberteil 2 und dem Unterteil 3 gebildete Hohlraum in zwei voneinander getrennte und gegeneinander abgedichtete Räume 4, 5 unterteilt wird, können mit ein und demselben Formwerkzeug 1 unterschiedliche Materialien verarbeitet werden.

Bezugszeichen

| | |
|---|---|
| 1 | Formwerkzeug insgesamt |
| 2 | Oberteil |
| 3 | Unterteil |
| 4 | Raum für Deckelteil, Deckelträger und Profilteil im Formwerkzeug |
| 5 | Raum für die Umfangsdichtung |
| 6 | Fixiervorsprung |
| 7 | Fixiervorsprung |
| 8 | Eingußkanäle |
| 9 | Elastomermasse |
| 10 | Deckelteil |
| 11 | Deckelträger |
| 12 | Flansch |
| 13 | Profilteil |
| 13' | Profilteil in Fig. 5 |
| 14 | Dichtungsaufnahme |
| 15 | Seite mit Berührung der Vorsprünge 6, 7 |
| 16 | Umfangsdichtung |
| 17 | Hohlraumdichtung |
| 17' | Hohlraumdichtung in Fig. 4 |
| 20 | Deckeleinheit insgesamt |
| 21 | Ersatzdichtung |
| 22 | Fingerförmige Ansätze derselben |
| 23 | Härterer Bereich des Profilteils 13' |
| 24 | Verbindungsfilm in Fig. 5 |

H       Hinterschneidung im Formwerkzeug 1

**Patentansprüche**

1. Verfahren zum Herstellen einer Deckeleinheit (20) mit einer Umfangsdichtung (16) für Fahrzeugdächer, bei dem in ein ein Oberteil (2) und ein Unterteil (3) umfassendes Formwerkzeug (1) wenigstens ein Deckelteil (10) und ein Deckelträger (11) unter Freilassung von Randspalte angeordnet werden, und bei geschlossenem Formwerkzeug (1) eine Elastomermasse (9) eingebracht wird, welche die Randspalte ausfüllt und das Deckelteil (10) mit dem Deckelträger (11) zu einer Einheit verbindet, an der die Umfangsdichtung (16) vorgesehen werden kann, dadurch **gekennzeichnet**, daß in einem Abstand zu der Anordnung aus Deckelteil (10) und Deckelträger (11) in das Formwerkzeug (1) ein eine Dichtungsaufnahme (14) bildendes Profilteil (13, 13') aus einem härteren Werkstoff als die Elastomermasse (9) eingelegt wird, und daß das Profilteil (13, 13') bei geschlossenem Formwerkzeug (1) lagefixiert wird.

2. Verfahren nach Anspruch 1, dadurch gekennzeichnet, daß am Unterteil (3) und/oder am Oberteil (2) des Formwerkzeugs (1) zur Lagefixierung Fixiervorsprünge (6,7) vorgesehen werden, welche das eingelegte Profilteil (13, 13') berühren.

3. Verfahren nach Anspruch 2, dadurch gekennzeichnet, daß die Fixiervorsprünge (6,7) das Profilteil (13, 13') an der von der Anordnung aus Deckelteil (10) und Deckelträger (11) abgewandten Seite (15) berühren.

4. Verfahren nach einem der Ansprüche 1 bis 3, dadurch gekennzeichnet, daß das Profilteil (13, 13') mehrteilig ausgelegt ist.

5. Verfahren nach einem der Ansprüche 1 bis 4, dadurch gekennzeichnet, daß das Profilteil (13, 13') einen C-förmigen Querschnitt hat, dessen offene Seite nach außen weist und das die Dichtungsaufnahme (14) begrenzt.

6. Verfahren nach einem der vorangehenden Ansprüche, dadurch gekennzeichnet, daß am Formwerkzeug (1) ein Formhohlraum (5) für die Umfangsdichtung (16) ausgebildet ist, der gegenüber der Deckeleinheit (20) getrennt und abgedichtet ist.

7. Verfahren nach Anspruch 6, dadurch gekennzeichnet, daß in dem Formhohlraum (5) für die Umfangsdichtung (16) eine weichere Materialmasse eingefüllt wird.

8. Verfahren nach Anspruch 6 oder 7, dadurch gekennzeichnet, daß die Fixiervorsprünge (6,7) für das Profilteil (13, 13') die Trennung und Abdichtung zum Formhohlraum (5) für die Umfangsdichtung bilden.

9. Verfahren nach einem der Ansprüche 6 bis 8, dadurch gekennzeichnet, daß die Umfangsdichtung (16) an dem Profilteil (13, 13') angeformt wird und als Hohlraumdichtung (17, 17') ausgebildet ist.

10. Verfahren nach Anspruch 9, dadurch gekennzeichnet, daß die angeformte Umfangsdichtung (16) vom Profilteil (13, 13') lösbar ist.

11. Verfahren nach einem der Ansprüche 6 bis 10, dadurch gekennzeichnet, daß der Formhohlraum (5) für die Umfangsdichtung (16) größtenteils vom Unterteil (3) des Formwerkzeugs (1) begrenzt wird und das Unterteil (3) eine Hinterschneidung (H) hat.

12. Deckeleinheit (20) für Fahrzeugdächer mit einem Deckelteil (10) und einem Deckelträger (11), die mittels einer Elastomermasse (9) zu einer Einheit verbunden sind, und mit einem am Außenrand vorgesehenen Umfangsdichtung (17), dadurch **gekennzeichnet,** daß ein Profilteil (13, 13') aus einem härteren Werkstoff als die Elastomermasse (9) durch die Elastomermasse zu der Deckeleinheit (20) verbunden ist und das Profilteil (13, 13') eine Dichtungsaufnahme (14) hat.

13. Deckeleinheit nach Anspruch 12, dadurch gekennzeichnet, daß an dem Profilteil (13, 13') die Umfangsdichtung (16) angeformt ist.

14. Deckeleinheit nach Anspruch 12 oder 13, dadurch gekennzeichnet, daß die Umfangsdichtung (16) eine Hohlraumdichtung (17, 17') ist.

15. Deckeleinheit nach Anspruch 13, dadurch gekennzeichnet, daß die angeformte Umfangsdichtung (16) vom Profilteil (13, 13') lösbar ist.

EP 0 501 027 A1

# FIG. 1

# FIG. 2

# FIG. 3

# FIG. 4

# FIG. 5

Europäisches
Patentamt

# EUROPÄISCHER RECHERCHENBERICHT

Nummer der Anmeldung

EP    91 12 1210

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | DE-A-3 742 719 (WEBASTO AG)<br><br>* Spalte 3, Zeile 41 - Zeile 49; Abbildung 1 *<br>* Spalte 4, Zeile 14 - Zeile 21; Abbildungen 1,2 *<br>* Ansprüche 2,10 *<br>--- | 1,4-7,<br>9-15 | B29C67/18<br>B60J10/12 |
| A | EP-A-0 368 817 (SIV)<br>* Spalte 2, Zeile 43 - Zeile 51; Ansprüche 1,5 *<br>* Spalte 3, Zeile 21 - Zeile 29; Abbildung *<br>--- | 1 | |
| D,A | DE-A-3 506 009 (ROCKWELL GOLDE GMBH)<br><br>* Seite 15, Zeile 4 - Zeile 20; Abbildungen *<br>--- | 1,5,9,<br>10,12-15 | |
| A | FR-A-2 599 677 (ROCKWELL GOLDE GMBH)<br><br>* Seite 11, Zeile 9 - Zeile 24; Abbildung 3 *<br>--- | 1,4,9,<br>12,14 | |
| A | GB-A-2 206 918 (OHI SEISAKUSHO CO. LTD.)<br>* Seite 6, Zeile 9 - Zeile 29; Abbildung 2 *<br>--- | 12-15 | RECHERCHIERTE SACHGEBIETE (Int. Cl.5) |
| A | EP-A-0 229 406 (VERMEULEN-HOLLANDIA OCTROOIEN II B.V.)<br>* Spalte 2, Zeile 16 - Zeile 40; Abbildung 2 *<br>----- | 12-15 | B29C<br>B60J<br>B60R |

Der vorliegende Recherchenbericht wurde für alle Patentansprüche erstellt

| Recherchenort | Abschlußdatum der Recherche | Prüfer |
|---|---|---|
| DEN HAAG | 27 MAERZ 1992 | TOPALIDIS A. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument